# EUROPÄISCHE PATENTSCHRIFT

(11) **EP 2 629 099 B1**
(45) Veröffentlichungstag und Bekanntmachung des Hinweises auf die Patenterteilung: **21.10.2015**
(21) Anmeldenummer: 12155634.4
(22) Anmeldetag: 15.02.2012
(51) Int. Cl.: G01N 35/04

(54) **Fördersystem für Materialproben, insbesondere medizinische Proben**
Conveying system for material samples, in particular medical samples
Système de transport pour échantillons de matériau, notamment échantillons médicaux

(43) Veröffentlichungstag der Anmeldung: 21.08.2013
(73) Patentinhaber: GLP systems GmbH, 21079 Hamburg (DE)
(72) Erfinder: Hecht, Robert, 82418 Seehausen (DE)
(74) Vertreter: Raffay & Fleck

(56) Entgegenhaltungen:
- WO-A1-2011/118190
- US-A- 5 730 276
- US-A1- 2002 146 347
- US-A1- 2010 239 461

## Beschreibung

Die Erfindung betrifft ein Fördersystem für Materialproben, insbesondere medizinische Proben gemäß dem Oberbegriff des Patentanspruches 1.

Im Bereich der Analyse von Materialproben gilt es häufig eine große Zahl von Proben in vergleichsweise kurzen Zeiträumen zu analysieren und durchzusetzen. Dies gilt insbesondere im Bereich medizinischer Proben, wie etwa Proben von Körperflüssigkeiten, die in medizinischen Analyselabors mit hohem Automatisierungsgrad untersucht werden. Das Labor erhält für die Untersuchung einer einzelnen Probe vergleichsweise geringe Abrechnungsbeiträge, weshalb bereits aus Kosteneffizienzgründen und allgemeinen Gründen der Wirtschaftlichkeit in diesem Bereich eine in hohem Maße automatisierte Behandlung und Bearbeitung der medizinischen Proben erforderlich ist und auch heute schon durchgeführt wird.

Dabei ist es üblich, dass einzelne Proben in einem Laborsystem entlang einer Förderbahn transportiert und zu den jeweils für ihre Bearbeitung vorgesehenen, an der Förderbahn angeordneten Analysegeräten verbracht werden. Dabei sind die einzelnen in der Förderbahn befindlichen und auf entlang der Förderbahn bewegbaren Probenhaltern angeordneten medizinischen Proben durchaus unterschiedlichen Analysen zu unterziehen, sei es nur einer solchen Analyse oder ggf. sogar aufeinanderfolgend unterschiedlicher Untersuchungen. Denkbare Analysen in jeweils unterschiedlichen Analysegeräten können z.B. bei einer Blutprobe die Untersuchung des Hämoglobinwertes (HB-Wertes), eines Cholesteringehaltes, des Gehaltes an Harnsäure oder anderer medizinisch relevanter Parameter sein. Urinproben können beispielsweise auf ihren pH-Wert, den Gehalt an roten Blutkörperchen oder einen allgemeinen Eiweißgehalt untersucht werden.

Für eine entsprechende Förderung der mit Proben haltenden Probengefäßen bestückten Probenhalter sind bereits seit langem Fördersysteme bekannt, die Förderbahnen und darin zu transportierende Probenhalter aufweisen. So gibt es derartige Systeme mit "passiven" Probenhaltern, die ohne eigene Antriebsmöglichkeiten mit Hilfe von in der Förderbahn angeordneten Fördereinrichtungen, wie insbesondere Förderbändern oder -riemen, in der Förderbahn bewegt werden. Beispiele für solche Lösungen sind in der DE 44 34 714 A1 und EP 2 074 431 B1 offenbart.

Bei derartigen Fördersystemen, bei denen die Antriebstechnik in den Förderbahnen angeordnet ist, besteht jedoch das Problem, dass bei einem Ausfall des Antriebes in der Regel die gesamt Laboranlage still steht und bis zur erfolgreichen Wartung oder Reparatur der Förderbahn und ihres Antriebssystemes nicht genutzt werden kann. Ein solcher Stillstand des gesamten Labors bedeutet nicht zuletzt aufgrund der für die Wirtschaftlichkeit des Laborbetriebes einzuhaltenden hohen Durchsatzraten einen erheblichen wirtschaftlichen Schaden.

Diesen Schaden zu vermeiden, helfen alternative Gestaltungsmöglichkeiten, bei denen die Antriebstechnik nicht in der Förderbahn selbst befindlich ist, sondern vielmehr in den Probenhaltern, die selbstfahrend ausgebildet sind. Ein Beispiel für solch eine Lösung eines Fördersystems ist in der US 6,429,016 B1 gezeigt. Dort sind selbstfahrende, drei- bzw. vierrädrige Probenhalter-Roboter offenbart, die über lenkbare Räder gesteuert entlang von Förderstrecken in der Förderbahn verbracht werden können zu einem jeweiligen Bestimmungsort. Die dort gezeigten Probenhalter-Roboter sind jeweils für die Aufnahme einer Vielzahl von Probengefäßen ausgebildet.

Ein weiteres Beispiel für ein Fördersystem mit in einer Förderbahn entlang einer Förderstrecke selbstständig verfahrenden Probenhaltern ist in der US 2005/0271555 A1 offenbart. Dort sind Probenhalter gezeigt, die mit wenigstens zwei Rädern, die auf einer starren, angetriebenen Achse sitzen, verfahren können. Die gezeigten Probenhalter sind mit einer kreisrunden Grundfläche versehen und bewegen sich in U-förmigen, tunnelartigen, nach oben offenen Bahnen, deren Seitenwände zugleich eine Führung für die Probenhalter geben. Die in der US 2005/0271555 A1 offenbarten Probenhalter sind jeweils zur Aufnahme eines einzigen, röhrchenförmigen Probengefäßes ausgebildet.

Wenngleich mit den in den zuletzt genannten Druckschriften US 6,429,016 B1 und US 2005/0271555 A1 offenbarten Fördersystemen durch die Verlagerung des Antriebes in die Probenhalter selbst das Problem einer langen Ausfallzeit des gesamten Fördersystems und mithin einer Laboranlage bei einem Defekt des Antriebes überwunden werden kann - hier kann stattdessen einfach ein Probenhalter mit defektem Antrieb entnommen und durch einen Probenhalter mit funktionierendem Antrieb ersetzt werden, bestehen bei den zuvor beschriebenen Systemen nach wie vor Nachteile und Mängel, die zu überwinden sich die Erfindung zur Aufgabe gemacht hat:
So sind die in der US 6,429,016 B1 gezeigten selbstfahrenden Probenhalter hinsichtlich ihrer Mechanik sehr komplex und filigran aufgebaut mit eigener Lenkung. Dieser komplexe und komplizierte Aufbau macht die einzelnen Probenhalter, von denen in einem Laborbetrieb eine große Vielzahl einzusetzen sind, kostspielig in der Anschaffung und zugleich störungsempfindlich.

Bei den in der US 2005/0271555 A1 gezeigten selbstfahrenden Probenhaltern ist der mechanische Aufbau der Probenhalter zwar verglichen mit den aus der zuvor genannten Druckschrift US 6,429,016 B1 bekannten deutlich einfacher und mithin der einzelne Probenhalter kostengünstiger herzustellen und robuster, jedoch ergeben sich auch hier Probleme. Zum einen ist die Förderbahn an sich durch das Erfordernis ihres U-förmigen Profils hinsichtlich des Materialeinsatzes aufwendig und kostspielig in der Fertigung. Auch sind in dieser Bahn die einzelnen Probenhalter nicht einfach frei zu erreichen, je nach Dichte des Verkehrsaufkommens in der Förderbahn kann es sich als kompliziert erweisen, einen der Probenhalter gezielt aus der Förderbahn zu entnehmen.

Ein weiteres Problem stellt sich im Hinblick auf den Antrieb und die Lenkbarkeit. Der Probenhalter gemäß dieser Druckschrift ist ohne eine lenkbare Achse ausgestattet, vielmehr wird eine Richtungsänderung durch eine Lenkung durch die Seitenwände der Bahn nach Art einer Bande erreicht. In Kurven- oder Weichenbereichen fährt der Probenhalter mit kreisförmigem Durchschnitt gegen eine Wand der Führungsbahn bzw. eine in den Verlauf der Bahn geschwenkte Weichenstellwand und fährt in diesem Bereich solange gegen die Wand bzw. die Weichenstellwand, bis sich sukzessive die starre Antriebsachse senkrecht zur neuen Fahrtrichtung ausgerichtet hat und der Probenhalter erneut Fahrt aufnehmen kann. Dies führt zu erheblich verlangsamten Durchfahrzeiten in Bereichen von Kurven und Weichen, wodurch die Verarbeitungsgeschwindigkeit in dem System insgesamt ausgebremst ist.

Dokument US2010/0239461 beschreibt ein Fördersystem zum Transport von einzelnen Probenbehältern. Die Förderelemente laufen dabei in einer vorgegebenen Bahn und werden von zwei Rädern auf der Unterseite angetrieben.

WO2011/118190 beschreibt eine Positioniervorrichtung, bei der eine Probe auf einer Platte montiert ist, welche durch Führungselementen beschränkt in verschiedene Positionen gebracht werden kann.

Hier Abhilfe zu schaffen ist, wie bereits erwähnt, Aufgabe der vorliegenden Erfindung. Mit der Erfindung soll also ein Fördersystem für Materialproben, insbesondere medizinische Proben gemäß dem vorbekannten Stand der Technik mit selbstfahrenden Probenhaltern dahingehend weitergebildet werden, dass bei zugleich einfach und robust aufgebauten Probenhaltern eine zuverlässige und zügige Durchfahrt der Förderstrecke auch im Bereich von Kurven und Weichen möglich ist bei sicherer Führung und Streckentreue.

Diese Aufgabe wird gelöst durch ein Fördersystem für Materialproben, insbesondere medizinische Proben mit den Merkmalen des Patentanspruchs 1. Vorteilhafte Weiterbildungen eines solchen Fördersystems sind in den Ansprüchen 2 bis 10 angegeben, die jeweils zumindest auf Patentanspruch 1 rückbezogen sind.

Erfindungsgemäß weist das Fördersystem für Materialproben, insbesondere medizinische Proben, eine Förderbahn auf, die wenigstens eine Förderstrecke ausbildet. Ferner enthält das System wenigstens einen entlang der Förderstrecke verbringbaren und selbstfahrenden Probenhalter, der zur Aufnahme eines Probengefäßes ausgebildet ist. Dieser Probenhalter weist einen Antriebsmotor, einen Energiespeicher zum Versorgen des Antriebsmotors mit Antriebsenergie und ein von dem Antriebsmotor antreibbares Friktionsrad zum Übertragen einer Antriebs-kraft auf die Förderbahn auf. Die Förderbahn hat zur Ausbildung der Förderstrecke wenigstens eine Führungsstruktur. In den vorstehend genannten Merkmalen stimmt das erfindungsgemäße Fördersystem mit solchen aus dem Stand der Technik überein. Neu und für die Erfindung kennzeichnend ist bei dem erfindungsgemäßen Fördersystem, dass der Probenhalter auf einer im Betrieb zur Förderbahn gewandten Unterseite genau und nur ein Rad aufweist. Dieses ist das von dem Antriebsmotor antreibbare Friktionsrad. Darüber hinaus verfügt der Probenhalter auf der Unterseite über wenigstens zwei Gleitelemente, die im Betrieb auf der Förderbahn aufliegen und entlang deren Oberfläche gleiten. Das Rad und die wenigstens zwei Gleitelemente liegen auf den Endpunkten eines Dreiecks und geben so dem Probenhalter sichere Stabilität, damit dieser ohne umzukippen entlang der Förderstrecke auf der Förderbahn verfahren kann. Die Führung entlang der Förderstrecke wird mittels eines auf der Unterseite des Probenhalters angeordneten Führungselementes bewerkstelligt, welches mit der Führungsstruktur in der Förderbahn zusammenwirkt. Diese Kombination aus Führungselement und Führungsstruktur bewirkt die Richtungsvorgabe für den selbstfahrenden Probenhalter hinsichtlich der Richtung, entlang derer er der Förderstrecke folgt. Mit anderen Worten wird der Probenhalter durch dieses Zusammenwirken von Führungsstruktur und Führungselement passiv auf der Förderbahn gelenkt.

Die Realisierung der Führung des Probenhalters entlang der Förderstrecke durch das Zusammenwirken des auf der Unterseite des Probenhalters angeordneten Führungselementes und der Führungsstruktur in der Förderbahn erlaubt es, den Probenhalter in seinem Antrieb vergleichsweise einfach und kostengünstig auszugestalten, da keinerlei mechanische oder steuerungstechnische Mittel für eine aktive Lenkung des Probenhalters vorzusehen sind. Ferner bedingt die Reduzierung der Anzahl der Räder auf ein einziges Rad, nämlich das von dem Antriebsmotor antreibbare Friktionsrad, eine weitere Vereinfachung. Insbesondere bei schnellen Fahrten in Kurven oder Abzweigen besteht bei entlang einer Achse angeordneten Radpaaren stets das Problem, dass die auf unterschiedlichen Kurvenradien laufenden Räder sich unterschiedlich schnell drehen müssen. Werden hierfür keine Möglichkeiten einer derartigen unterschiedlichen Drehzahl einzelner Räder einer Achse vorgehen (beispielsweise durch kompliziert anzusteuernde Einzelradantriebe oder aber durch Differenziale an den jeweiligen Rädern), so neigt der Probenhalter, der mit einer entsprechenden zweirädrigen Achse ausgestattet ist, in Kurvenfahrten oder bei Abzweigen, die zu durchfahren sind, zum Ausbrechen aus der Förderstrecke oder gar zum Kippen.

Die Maßnahme, hier lediglich ein einziges als Friktionsrad ausgebildetes und mit dem Antrieb verbundenes Rad vorzusehen, führt also im Zusammenhang mit der Richtungsführung durch Führungselement und Führungsstruktur dazu, dass in dem erfindungsgemäßen Fördersystem die Probenhalter entsprechende Kurven oder Abzweige mit vergleichsweise erhöhter Geschwindigkeit durchfahren können als dies etwa beim Stand der Technik gemäß der US 2005/0271555 A1 der Fall ist. Damit aber kann der Durchsatz in einem erfindungsgemäßen Fördersystem insgesamt erhöht werden, bzw. es ergeben sich größere Freiheiten bei der Gestaltung der Förderstrecken entlang der Förderbahn.

Um dem Probenhalter die für den Vortrieb erforderliche Stabilität zu geben, sind auf dessen Unterseite wenigstens zwei Gleitelement angeordnet, die weitere Abstützpunkte zusätzlich zu dem Auflagerpunkt des Friktionsrades bilden. Die Stabilität wird erreicht durch die dreieckartige Anordnung zwischen den wenigstens zwei Gleitelementen und dem Rad. Die Gleitelemente sollten dabei so ausgewählt werden, dass sie eine geringe Reibung verursachen. Hierzu sind entsprechende Materialien zu wählen, insbesondere solche mit gegenüber dem Material der Förderbahn geringer Gleitreibung, beispielsweise ein solcher Kunststoff. Hier kommen Kunststoffe wie etwa Teflon oder vergleichbare reibungsarme Kunststoffe in Betracht. Zudem ist die Größe der Gleitelemente entsprechend gering zu halten, diese können beispielsweise als Sphärenabschnitte gebildet sein, wodurch sich nahezu punktförmige Auflagen auf der Förderbahn ergeben.

Gemäß einer vorteilhaften Weiterbildung der Erfindung weist das Rad eine starre und nicht lenkbare Achse auf. Zwar ist es grundsätzlich möglich, dem Rad eine passiv gelenkte Achse zuzuordnen, die die Lenkbewegungen, wie sie durch das Zusammenwirken zwischen Führungselement und Führungsstruktur auf den Probenhalter übertragen werden, nachführt, jedoch ist eine starre und nicht lenkbare Achse hinsichtlich ihres Aufbaus und der Mechanik deutlich einfacher und robuster, was zu einfacher aufgebauten, kostengünstiger zu produzierenden und auch insgesamt haltbareren und robusteren Probenhaltern führt.

Mit Vorteil ist das Rad mit seiner Längserstreckung entlang einer Mittelachse des Probenhalters angeordnet. Die Drehachse des Rades verläuft dann also im Wesentlichen senkrecht zu der Mittelachse. Einer Anordnung auf der Mittelachse des Probenhalters in der genannten Weise ist von Vorteil, da damit sowohl für in Fahrtrichtung gesehen rechts verlaufende Kurven und Abzweige wie auch für solche, die in Fahrtrichtung gesehen nach links weisen, gleichartige Fahreigenschaften erzielt werden können. Auch reduziert eine solche Anordnung die bei entsprechenden Kurvenfahrten oder beim Durchfahren von Abzweigen auftretenden und durch die Gleitelemente abzufangenden Kippmomente.

Besonders günstige Lenkeigenschaften beim Abfahren der Förderstrecke ergeben sich, wenn das Führungselement auf einer Linie entlang der Längserstreckung des Rades liegt. Das Führungselement liegt damit also ausgehend von dem Rad gesehen entlang einer Richtung, in der dieses abrollt. Dadurch können die ausgeübten Lenkmomente einfach auf das Rad übertragen werden, da dieses weitgehend um eine senkrecht durch das Rad verlaufende Achse gedreht werden kann, ohne einen seitlichen Versatz bzw. ein seitliches Verschieben des Probenhalters zu bewirken bzw. zu erfordern.

Besonders günstig verhält sich der selbstfahrende Probenhalter in einem erfindungsgemäßen Fördersystem dann, wenn das Rad ausgehend von einer Position des Schwerpunktes des Probenhalters auf dessen Unterseite auf einer ersten Seite dieser Projektion liegt und das Führungselement auf einer zweiten, gegenüberliegenden Seite der Projektion liegt. Eine solche Anordnung ergibt ein besonders stabiles Fahrverhalten und Führungsverhalten des selbstfahrenden Probenhalters entlang der Förderstrecke auch in Kurven und Abzweigen.

Eine bevorzugte Ausgestaltung von Führungsstruktur und Führungselement besteht darin, dass die Führungsstruktur eine sich quer zur Oberflächen der Führungsbahn in deren Tiefe erstreckende Führungsnut ist und dass das Führungselement durch einen an der Unterseite des Probenhalters angeordneten, von dieser abstehenden Führungsstift gebildet wird. Der Führungsstift wird in der Führungsnut seitlich geführt und kann entlang der Längsrichtung diese Nut entlang gleiten. Der Verlauf der Führungsnut gibt dann die Richtung für die Fahrt des Probenhalters vor. Der Führungsstift hat insbesondere einen kreisförmigen Querschnitt, so dass er die Drehbewegungen des Probenhalters relativ zu der Führungsnut in Kurvenfahrten oder Abzweigen einfach nachvollziehen kann. Dabei ist es bevorzugt, dass bei in die Förderbahn eingesetztem Probenhalter der Führungsstift nicht bis in den Nutengrund der Führungsnut reicht, um hier nicht eine zusätzliche Reibung zu erzeugen. Es kann jedoch auch gewollt sein, den Führungsstift am Nutengrund aufliegen zu lassen, wenn dieser zugleich eines der Gleitelemente darstellt. Dann ist jedoch dafür Sorge zu tragen, dass zwischen dem Nutengrund und der distalen Spitze des Führungsstiftes eine entsprechend geringe Reibung gebildet ist.

Grundsätzlich kann der Probenhalter jedwede Form einnehmen, die für die Zwecke des jeweiligen Fördersystems in der konkreten Ausgestaltung geeignet ist. Derzeit bevorzugt ist allerdings, dass der Probenhalter eine im Wesentlichen rechteckige Grundfläche aufweist. Eine solche hat sich in der Herstellung und Umsetzung als besonders einfach zu realisieren gezeigt und zugleich als praktisch hinsichtlich der möglichen Anordnung der wesentlichen Elemente Rad, Gleitelemente und Führungselement auf der Unterseite des Probenhalters. Dabei ist es besonders günstig, wenn die rechteckige Grundfläche des Probenhalters an der in Vorwärtsfahrtrichtung gesehen vorderen Seite abgeschrägten Ecken aufweist. Diese Abschrägungen dienen insbesondere der Anordnung von seitlich wirkenden Sensoren, mit denen während der Vorwärtsfahrt seitliche Bereiche überwacht werden können zur Kollisionsvermeidung.

Das erfindungsgemäße Fördersystem enthält insbesondere einen solchen Probenhalter, der für die Aufnahme eines einzigen, insbesondere röhrchenförmigen Probengefäßes ausgebildet ist und eine entsprechende Aufnahme aufweist.

Grundsätzlich kann das erfindungsgemäße Fördersystem aus einer Förderbahn und lediglich einem einzigen selbstfahrenden Probenhalter bestehen. In der Praxis werden jedoch eine Vielzahl derartiger Probenhalter in der Förderbahn zum Einsatz kommen, um große Mengen von Proben in dem Fördersystem zu dem jeweiligen Zielort zu verbringen und eine automatisierte Bearbeitung zu ermöglichen.

Weitere Vorteile und Merkmale der Erfindung ergeben sich aus der nachfolgenden Beschreibung eines Ausführungsbeispiels anhand der beigefügten Figuren. Dabei zeigen:
- Fig. 1: eine schematische Aufsicht auf eine mögliche Ausgestaltung eines erfindungsgemäßen Fördersystems mit der Förderbahn, in der Förderbahn ausgebildeten Förderstrecken und darin befindlichen Probenhaltern;
- Fig. 2: eine perspektivische Ansicht von schräg unten auf einen Probenhalter des erfindungsgemäßen Fördersystems;
- Fig. 3: einen Längsschnitt durch den Probenhalter gemäß Fig. 2;
- Fig. 4: eine Ansicht des Probenhalters gemäß Fig. 2 von unten; und
- Fig. 5: eine Seitenansicht eines auf die Förderbahn aufgesetzten Probenhalters.

In den Figuren sind in schematischer Darstellung verschiedene Ansichten der wesentlichen Komponenten eines erfindungsgemäßen Fördersystems in einer möglichen Ausgestaltung dargestellt. Die Figuren sind dabei nicht vollständig in der Darstellung sämtlicher Details, beschränken sich in der Offenbarung auf die für die Erfindung wesentlichen Elemente. Auch sind die Figuren schematisiert für die Erläuterung der hier wesentlichen Elemente und geben nicht notwendig die für eine praktische Umsetzung im Großbetrieb ggf. zu wählenden Konfigurationen wieder.

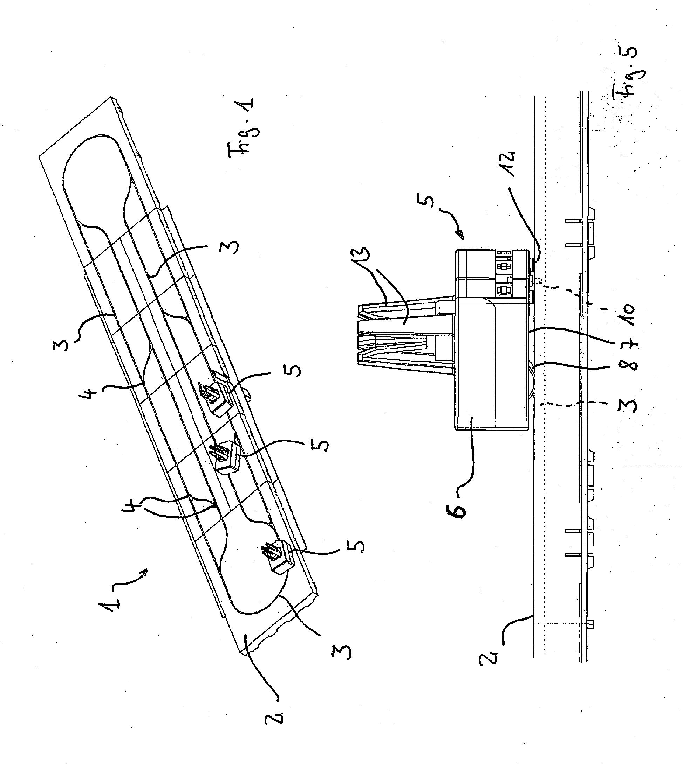

In Fig. 1 ist in einer schematischen perspektivischen Aufsicht eine mögliche Gestaltungsvariante eines Fördersystems 1 gezeigt. Das Fördersystem 1 enthält eine Förderbahn 2. In der Förderbahn 2 sind Führungsnuten 3 in die Tiefe der Förderbahn 2 und quer zu deren Oberfläche eingelassen, wobei die Führungsnuten 3 mit ihren Verläufen Förderstrecken definieren. Dabei sind die Führungsnuten 3 an Abzweigen 4, an denen Weichen angeordnet sind, verzweigt und in verschiedener Konfiguration untereinander verbunden, so dass je nach Verschaltung der Weichen unterschiedliche Förderstrecken durch Verschaltung unterschiedlicher Verläufe der Führungsnuten 3 gebildet bzw. geschaltet werden können.

Auf der Förderbahn 2 sind in verschiedenen Streckenabschnitten insgesamt drei selbstfahrende Probenhalter 5 angeordnet. Diese können sich selbstfahrend entlang der Förderbahn bewegen in nachfolgend noch näher beschriebener Weise.

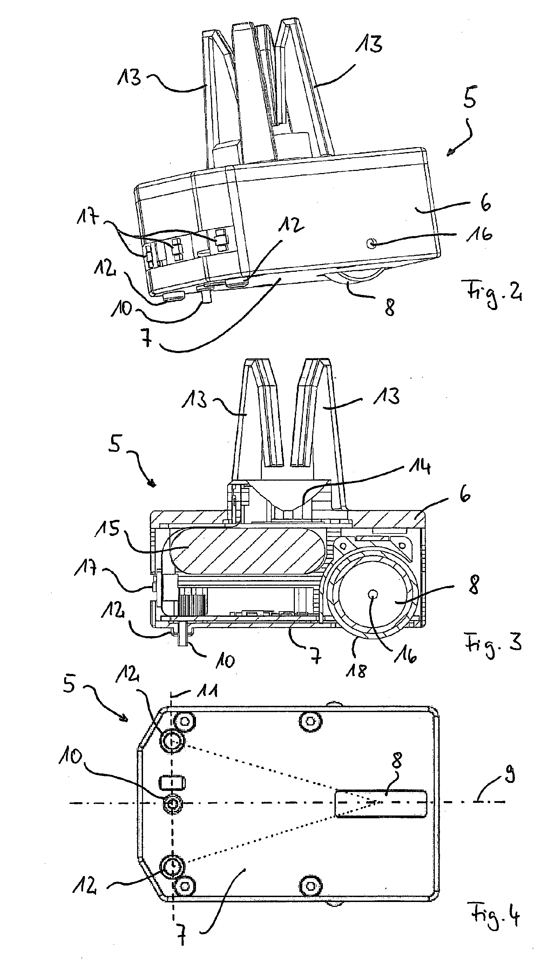

Ein Probenhalter 5 ist in den Figuren 2 bis 4 noch einmal näher und in seinen Einzelheiten dargestellt. Der Probenhalter 5 weist einen Basiskörper 6 auf mit einer im Wesentlichen rechteckigen Grundfläche (vgl. Fig. 4). Auf einer Unterseite 7 des Basiskörpers 6 des Probenhalters 5 wird ein von dem Basiskörper 6 gebildetes Gehäuse von einem Friktionsrad 8 durchbrochen. Das Friktionsrad 8 ist (vgl. Fig. 4) in seine Längserstreckung entlang einer Mittelachse 9 des Probenhalters 5 angeordnet. Es befindet sich ausgehend von einer Projektion eines Schwerpunktes des Probenhalters 5 auf einer in Fig. 4 rechts dargestellten ersten Seite. Gegenüberliegend des Friktionsrades 8 ist ein sich senkrecht von der Unterseite 7 nach unten erstreckende Führungsstift 10 angeordnet, der ebenfalls auf der Mittelachse 9 liegt und insoweit mit der Längserstreckung des Friktionsrades 8 fluchtet. Wie in Fig. 4 zu erkennen ist, liegt der Führungsstift 10 auf einer der Position des Friktionsrades 8 diametral gegenüberliegenden Seite der Projektion des Schwerpunktes, welche sich zwischen diesen beiden Elementen befindet (in Fig. 4 nicht eingezeichnet). Zu beiden Seiten des Führungsstiftes 10 sind entlang einer im Wesentlichen senkrecht zu der Mittelachse 9 verlaufenden Linie 11 zwei Gleitelemente 12 angeordnet, die von der Unterseite 7 hervorstehen. Diese Gleitelemente 12 sind aus einem Material, welches gegenüber dem Material der Oberfläche der Führungsbahn 2 eine geringe Gleitreibung aufweist, z.B. aus einem entsprechenden Kunststoff wie etwa Teflon, gebildet.

Auf der der Unterseite 7 gegenüberliegenden Oberseite des Probenhalters 5 ist eine Aufnahme für ein einziges Probengefäß, insbesondere ein röhrchenförmiges Probengefäß durch Haltefinger 13 ausgebildet. Zwischen die Haltefinger 13 kann ein röhrchenförmiges Probengefäß eingeführt werden bis auf den Grund einer schalenförmigen Aufnahme 14.

Wie in Fig. 3 zu erkennen ist, ist im Inneren der Basis 6 des Probenhalters 5 ein Akkumulator 15 angeordnet. Dieser speist den Antriebsmotor (in Fig. 3 nicht dargestellt), mittels dem das Friktionsrad 8 in Rotation bringbar ist, für den Fahrantrieb des Probenhalters 5 mit Energie und versorgt auch weitere elektrische Verbraucher, die an dem Probenhalter 5 angeordnet sind, so z.B. Abstandssensoren 17, die einer Kollisionswarnungsüberwachung dienen.

Das Friktionsrad 8 ist entlang seines Umfanges mit einem Reibbelag 18 versehen, der einer Kraftübertragung der Vortriebskraft auf die Oberfläche der Förderbahn 2 dient, um so für den Vortrieb des Probenhalters 5 zu sorgen. Dabei dreht das Friktionsrad 8 um eine Achse 16, die eine starre und nicht lenkbare Achse ist.

In Fig. 4 ist schließlich noch zu erkennen, dass die Gleitelemente (hier ihre Mittelpunkte) und das Friktionsrad (hier dessen Mittelpunkt) auf den Eckpunkten eines Dreieckes liegen (hierzu sind die gepunkteten Linien eingezeichnet), wobei dieses Dreieck hier ein gleichschenkliges Dreieck ist. Dabei sind die Gleitelemente 12 maximal in die dem Friktionsrad 8 gegenüberliegenden äußeren Ecken gesetzt, um damit eine möglichst breite auseinandergezogene Auflage und hohe Stabilität des im Betrieb auf der Förderbahn 2 auf dem Friktionsrad 8 und den beiden Gleitelementen 12 ruhenden Probenhalters 5 zu geben.

In Fig. 5 ist schließlich zu erkennen, wie der Probenhalter 5 im Betrieb auf der Förderbahn 2 aufsitzt, wobei der Führungsstift 10 in die Führungsnut 3 hineinragt und dem selbstfahrenden Probenhalter 5 die Führung entlang der Förderstrecke gibt. Der Führungsstift 10 ragt dabei nicht bis an den Grund der Führungsnut 3, sondern liegt mit seinem distalen Ende frei. Somit ruht der Probenhalter 5 lediglich an drei Auflagepunkten auf der Förderbahn 2, nämlich den beiden Gleitelementen 12 und dem Friktionsrad 8. Das Friktionsrad 8 läuft bei einer Geradeausfahrt wegen der in Flucht liegenden Ausrichtung mit dem Führungsstift 10 auf der Führungsnut 3, weshalb es breiter gebildet ist als die Weite der Führungsnut 3, so dass es die Führungsnut 3 zu den Rändern in ausreichendem Maße überragt, um eine stabile Auflage zu bilden und zugleich ausreichend Antriebskraft auf die Oberfläche der Führungsbahn 2 übertragen zu können.

In normaler Vorwärtsfahrt des Probenhalters 5 schiebt das in dieser Fahrtrichtung hinten gelagerte Friktionsrad 8 den Korpus 6 des Probenhalters 5 in Vorwärtsrichtung, wobei das vordere Ende des Probenhalters 5 auf den Gleitelementen 12 ruht und über diese in der Förderbahn 2 gleitet. Gelangt der Probenhalter 5 nun in den Bereich eines Abzweiges oder einer Kurve, so folgt der Führungsstift 10 der entsprechenden Richtung der Führungsnut 3 und nimmt so das vordere Ende des Probenhalters 5 mit. Damit wird eine Drehbewegung erzeugt, um die der Probenhalter 5 auf dem Auflagepunkt des Friktionsrades 8 gedreht wird. Dadurch, dass lediglich ein Rad, das Friktionsrad 8, an dem Probenhalter 5 vorhanden ist, kommt es hier nicht zu Problemen aufgrund von Querkräften hervorgerufen durch unterschiedliche Weglängen eines außen oder innen in der Kurve laufenden Rades einer Achse. Entsprechend sind hier keine umfangreichen technischen Maßnahmen erforderlich, solche Räder einer Achse hinsichtlich ihrer Rotationsgeschwindigkeiten zu entkoppeln und es ergeben sich auch keine Probleme, wie sie bei starr auf einer Achse gelagerten Rädern vorkommen können, insbesondere hinsichtlich einer reduzierten Geschwindigkeit bei Durchfahrten von Kurven oder Abzweigen. Diese können in dem erfindungsgemäßen Fördersystem von den wie beschrieben mit nur einem Rad gebildeten Probenhaltern 5 mit deutlich höherer Geschwindigkeit durchfahren werden, was zu einem insgesamt erhöhten Durchsatz in der Förderbahn 2 führt. Damit können in einer Förderbahn 2 entweder pro Zeiteinheit mehr Probenhalter 5 und damit Proben durchgesetzt werden oder aber es kann für die Förderbahn 2 einer bestimmten Durchsatzkapazität auf eine weitläufigere Auslegung mit einer größeren Vielzahl von Wartepositionen und Abstellbereichen verzichtet, das Bahnsystem kompakter und kleiner ausgebildet werden.

Selbstverständlich kann der gezeigte und erfindungsgemäße selbstfahrende Probenhalter 5 auch in umgekehrter Richtung, also "rückwärts", fahren, so dass das Friktionsrad 8 dann den Basiskörper 6 und damit den Probenhalter 5 zieht.

### Bezugszeichenliste

- 1: Fördersystem
- 2: Förderbahn
- 3: Führungsnut
- 4: Abzweig
- 5: Probenhalter
- 6: Basiskörper
- 7: Unterseite
- 8: Friktionsrad
- 9: Mittelachse
- 10: Führungsstift
- 11: Linie
- 12: Gleitelement
- 13: Haltefinger
- 14: Aufnahme
- 15: Akku
- 16: Achse
- 17: Abstandssensor
- 18: Reibbelag

## Patentansprüche

1. Fördersystem für Materialproben, insbesondere medizinische Proben, mit einer wenigstens eine Förderstrecke ausbildenden Förderbahn (2) und mit wenigstens einem entlang der Förderstrecke verbringbaren, selbstfahrenden, zur Aufnahme eines Probengefäßes ausgebildeten Probenhalter (5), welcher Probenhalter (5) einen Antriebsmotor, einen Energiespeicher (15) zum Versorgen des Antriebsmotors mit Antriebsenergie und ein von dem Antriebsmotor antreibbares Friktionsrad (8) zum Übertragen einer Antriebskraft auf die Förderbahn (2) aufweist, wobei die Förderbahn (2) zur Ausbildung der Förderstrecke wenigstens eine Führungsstruktur (3) aufweist, **dadurch gekennzeichnet, dass** der Probenhalter (5) auf einer im Betrieb zur Förderbahn (2) gewandten Unterseite (7) genau ein Rad aufweist, welches das von dem Antriebsmotor antreibbare Friktionsrad (8) ist, dass der Probenhalter (5) auf der Unterseite (7) ferner wenigstens zwei Gleitelemente (12) aufweist, die im Betrieb auf der Förderbahn (2) aufliegen und entlang deren Oberfläche gleiten, wobei die wenigstens zwei Gleitelemente (12) und das Rad (8) auf den Endpunkten eines Dreiecks liegen, und dass der Probenhalter (5) auf seiner Unterseite ein Führungselement (10) aufweist zum Zusammenwirken mit der Führungsstruktur (3) in der Förderbahn (2) zur Führung des Probenhalters (5) entlang der Förderstrecke.

2. Fördersystem nach Anspruch 1 , **dadurch gekennzeichnet, dass** das Rad (8) eine starre und nicht lenkbare Achse (16) aufweist.

3. Fördersystem nach einem der vorhergehenden Ansprüche, **dadurch gekennzeichnet, dass** das Rad (8) mit seiner Laufrichtung entlang einer Mittelachse (9) des Probenhalters (5) angeordnet ist.

4. Fördersystem nach einem der vorhergehenden Ansprüche, **dadurch gekennzeichnet, dass** das Führungselement (10) auf einer Linie entlang der Laufrichtung des Rades (8) liegt.

5. Fördersystem nach einem Anspruch 3, **dadurch gekennzeichnet, dass** das Rad (8) ausgehend von einer Projektion des Schwerpunktes des Probenhalters (5) auf dessen Unterseite (7) und auf die Mittelachse (9) des Probenhalters (5) auf einer ersten Seite dieser Projektion liegt und dass das Führungselement (10) auf einer zweiten, gegenüberliegenden Seite dieser Projektion liegt.

6. Fördersystem nach einem der vorhergehenden Ansprüche, **gekennzeichnet durch** eine in der Führungsbahn (2) ausgebildete, sich quer zu deren Oberfläche in deren Tiefe erstreckende Führungsnut als Führungsstruktur (3) und einen an der Unterseite des Probenhalters (5) angeordneten, von dieser abstehenden Führungsstift als Führungselement (10).

7. Fördersystem nach einem der vorhergehenden Ansprüche, **gekennzeichnet durch** Gleitelemente (12) aus einem Material mit gegenüber dem Material der Förderbahn (2) geringer Gleitreibung, insbesondere einem solchen Kunststoff.

8. Fördersystem nach einem der vorhergehenden Ansprüche, **dadurch gekennzeichnet, dass** der Probenhalter (5) eine im Wesentlichen rechteckige Grundfläche aufweist.

9. Fördersystem nach Anspruch 7, **dadurch gekennzeichnet, dass** der Probenhalter (5) eine rechteckige Grundfläche mit an seinem in Vorwärtsfahrtrichtung gesehen vorderen Ende abgeschrägten Ecken aufweist.

10. Fördersystem nach einem der vorhergehenden Ansprüche, **dadurch gekennzeichnet, dass** der Probenhalter (5) eine Aufnahme (13, 14) für ein einziges, insbesondere röhrchenförmiges, Probengefäß aufweist.

## Claims

1. A conveying system for material samples, especially medical samples, comprising a conveyor track (2) forming at least one conveying section and at least one self-propelled sample holder (5) which can be displaced along the conveying section and is designed to hold a sample vessel, which sample holder (5) comprises a drive motor, an energy accumulator (15) for supplying the drive motor with driving energy and a friction wheel (8), drivable by the drive motor, for transmitting a driving force onto the conveyor track (2), said conveyor track (2) having at least one guide structure (3) to form the conveying section, **characterised in that** the sample holder (5) has exactly one wheel on a lower side (7) facing the conveying track (2) in operation, which wheel is the friction wheel (8) that can be driven by the drive motor, that the sample holder (5), on its lower side (7), further has at least two sliding elements (12) which rest on the conveying track (2) in operation and slide along its surface, said at least two sliding elements (12) and the wheel (8) lying on the vertices of a triangle, and the sample holder (5), on its lower side, has a guide element (10) for cooperation with the guide structure (3) in the conveyor track (2) to guide the sample holder (5) along the conveying section.

2. The conveying system of claim 1, **characterised in that** the wheel (8) has a fixed and not steerable axle (16).

3. The conveying system according to any of the preceding claims, **characterised in that** the wheel (8) is arranged with its running direction along a central axis (9) of the sample holder (5).

4. The conveying system according to any of the preceding claims, **characterised in that** the guiding element (10) rests on a line along the running direction of the wheel (8).

5. The conveying system of claim 3, **characterised in that** the wheel (8) starting from a projection of the centre of gravity of the sample holder (5) rests on the lower side (7) of the latter and on the central axis (9) of the sample holder (5) on a first side of said projection and that the guiding element (10) rests on a second, opposite side of said projection.

6. The conveying system according to any of the preceding claims, **characterised by** guiding groove, formed in the guiding track (2), extending perpendicular to the surface of the latter in the depth of the latter, acting as a guide structure (3) and a guide pin arranged on the lower side of the sample holder (5), protruding from the latter, acting as a guiding element (10).

7. The conveying system according to any of the preceding claims, **characterised by** sliding elements (12) made of a material whose sliding friction is lower than the material constituting the conveyor track (2), in particular a synthetic material.

8. The conveying system according to any of the preceding claims, **characterised in that** the sample holder (5) has a substantially rectangular base.

9. The conveying system of claim 7, **characterised in that** the sample holder (5) has a rectangular base with bevelled corners, at its front end as seen in forward running direction.

10. The conveying system according to any of the preceding claims, **characterised in that** the sample holder (5) has a receptacle (13, 14) for a single sample vessel, in particular in the shape of a small tube.

## Revendications

1. Système de transport pour échantillons de matières, notamment pour échantillons médicaux, comprenant une voie de transport (2), qui forme au moins un tronçon de transport, et au moins un porte-échantillon (5) automoteur, pouvant être déplacé le long du tronçon de transport et conçu pour recevoir un récipient d'échantillon, ledit porte-échantillon (5) présentant un moteur d'entraînement, un accumulateur d'énergie (15) servant à alimenter en énergie d'entraînement le moteur d'entraînement, et une roue de friction (8) pouvant être entraînée par le moteur d'entraînement et servant à transmettre une force d'entraînement à la voie de transport (2), ladite voie de transport (2) présentant au moins une structure de guidage (3) pour former le tronçon de transport, **caractérisé en ce que** le porte-échantillon (5) présente, sur une face inférieure (7) orientée vers la voie de transport (2) en service, exactement une roue qui constitue la roue de friction (8) pouvant être entraînée par le moteur d'entraînement, que le porte-échantillon (5) présente en outre, sur la face inférieure (7), au moins deux éléments de glissement (12) qui, en service, reposent sur la voie de transport (2) et glissent le long de la surface de cette dernière, lesdits au moins deux éléments de glissement (12) et la roue (8) étant situés sur les sommets d'un triangle et le porte-échantillon (5) présente enfin, sur sa face inférieure, un élément de guidage (10) destiné à coopérer avec la structure de guidage (3) dans la voie de transport (2) pour guider le porte-échantillon (5) le long du tronçon de transport.

2. Système de transport selon la revendication 1, **caractérisé en ce que** la roue (8) présente un essieu (16) fixe et non orientable.

3. Système de transport selon l'une quelconque des revendications précédentes, **caractérisé en ce que** le sens de rotation de la roue (8) est le long d'un axe central (9) du porte-échantillon (5).

4. Système de transport selon l'une quelconque des revendications précédentes, **caractérisé en ce que** l'élément de guidage (10) repose sur une ligne le long du sens de rotation de la roue (8).

5. Système de transport selon la revendication 3, **caractérisé en ce que** la roue (8) en partant d'une projection du centre de gravité du porte-échantillon (5) repose sur le côté inférieur (7) dudit porte-échantillon et sur l'axe central (9) du porte-échantillon (5) sur un premier côté de la dite projection et que l'élément de guidage (10) repose sur un second côté, opposé, de ladite projection.

6. Système de transport selon l'une quelconque des revendications précédentes, **caractérisé par** une gorge de guidage formée dans la voie de guidage (2), s'étendant perpendiculairement à la surface de cette dernière, dans la profondeur de cette dernière, faisant office de structure de guidage (3) et par une goupille de guidage disposé sur le côté inférieur du porte-échantillon (5), faisant saillie à partir de celui-ci, et faisant office d'élément de guidage (10).

7. Système de transport selon l'une quelconque des revendications précédentes, **caractérisé par** des éléments de glissement (12) en un matériau de friction de glissement inférieure à celle du matériau constituant la voie de transport (2), en particulier en matériau synthétique.

8. Système de transport selon l'une quelconque des revendications précédentes, **caractérisé en ce que** le porte-échantillon (5) présente une base substantiellement rectangulaire.

9. Système de transport selon la revendication 7, **caractérisé en ce que** le porte-échantillon (5) présente une base rectangulaire avec des coins biseautés en son extrémité avant, vue dans le sens de déplacement vers l'avant.

10. Système de transport selon l'une quelconque des revendications précédentes, **caractérisé en ce que** le porte-échantillon (5) présente un réceptacle (13, 14) pour un seul récipient pour échantillon, en particulier en forme de petit tube.
